# EUROPÄISCHE PATENTSCHRIFT

(11) **EP 1 211 176 B1**
(45) Veröffentlichungstag und Bekanntmachung des Hinweises auf die Patenterteilung: **21.12.2005**
(21) Anmeldenummer: 01125035.4
(22) Anmeldetag: 15.10.2001
(51) Int. Cl.: B64D 11/06, B60N 2/01

(54) **Anordnung von Passagiersitzen in einer Flugzeugpassagierkabine**
Passenger seat arrangement in an aircraft cabin
Aménagement des sièges dans la cabine d'un aéronef

(30) Priorität: 30.11.2000 DE 10059603
(43) Veröffentlichungstag der Anmeldung: 05.06.2002
(73) Patentinhaber: Airbus Deutschland GmbH, 21129 Hamburg (DE)
(72) Erfinder: Schmidt-Schäffer, Tobias, Dipl.-Des., 70174 Stuttgart (DE)
(74) Vertreter: Hansmann, Dierk

(56) Entgegenhaltungen:
- EP-A- 0 850 834
- EP-A- 0 922 925
- DE-A- 19 544 754
- FR-A- 647 809
- FR-A- 1 311 972
- US-A- 4 834 452

## Beschreibung

Die Erfindung betrifft eine Passagierkabine mit einer Anordnung von Passagiersitzen, insbesondere eine Flugzeugpassagierkabine, wobei die Passagiersitze in eine Sitzposition mit aufrechter Rückenlehne und in zumindest eine Liegeposition mit abgesenkter Rückenlehne einstellbar sind sowie an der Außenwandung der Passagierkabine eine überlappende Anordnung von Passagiersitzen vorgesehen ist.

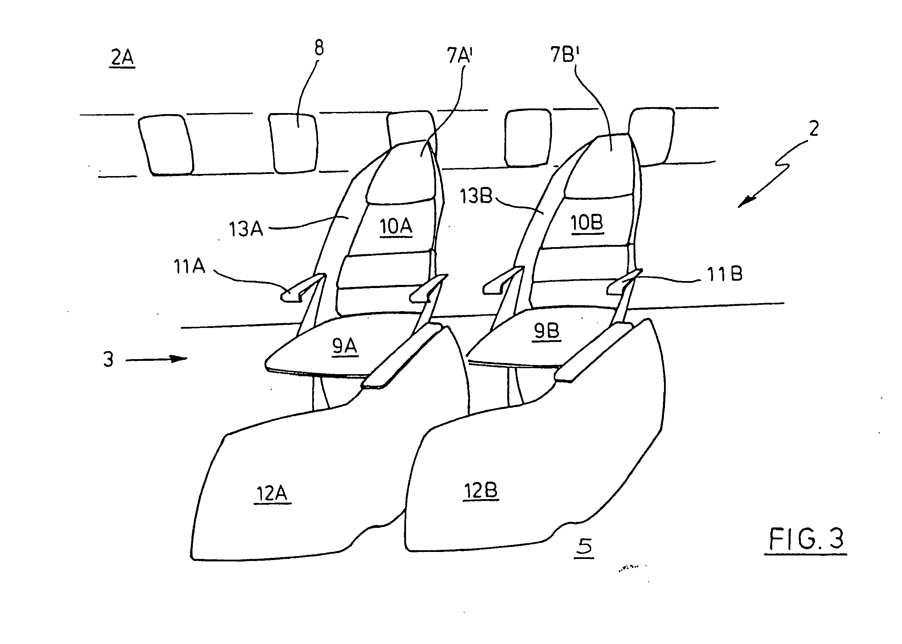

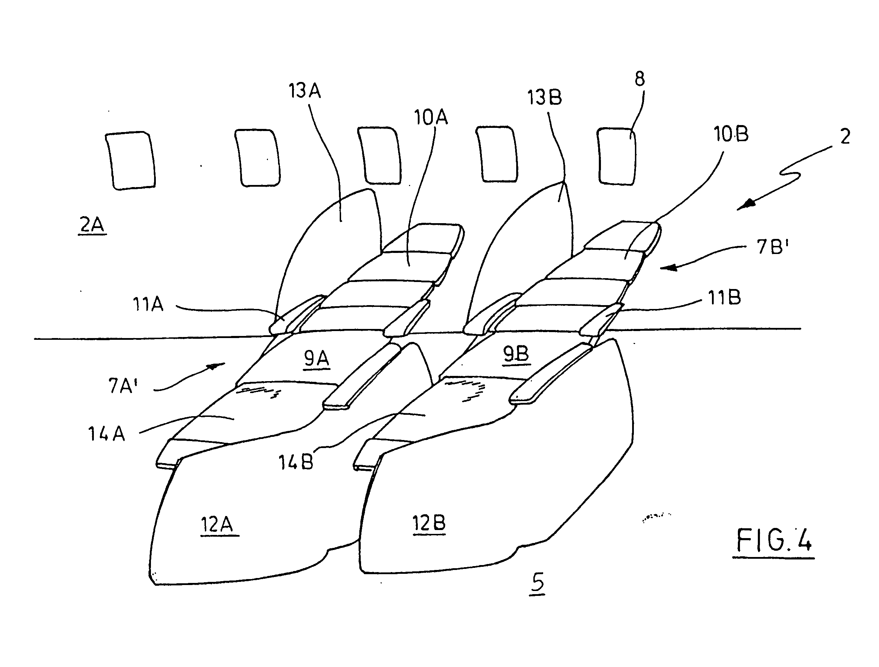

Das Dokument DE-OS 195 44 754, insbesondere die Figuren 3 und 4 sowie 22 zeigen Sitzlayouts eines Bereichs einer Flugzeugpassagierkabine. Die mögliche Anordnung von Passagiersitzen gemäß Fig. 22 sieht Sitzeinheiten vor, die in Flugzeuglängsrichtung bzw. angepasst an die Außenwandung der Flugzeugkabine leicht verdreht zur Flugzeuglängsrichtung angeordnet sind. In dieser Ausführungsform ist ein ausreichender Sitzabstand zwischen den Sitzen notwendig, der neben einem komfortablen Sitzen auch ein Liegen des Passagieres ermöglicht und einen ausreichenden Platz zum Verstellen der Sitzeinheit von der Sitzin die Liegeposition bietet. Weiterhin ist im Bereich des Übergangs zur normalen Kabinenbreite eine Doppelsitzanordnung mit nebeneinander angeordneten Passagiersitzen ersichtlich, wobei der am Fenster Sitzende hier ein erhebliches Problem der Zugänglichkeit hat, wenn der in Gangrichtung positionierte Sitz in Schlafposition eingestellt ist. Der Fenstersitzpassagier kann sich nicht ohne eine Störung des Passagiers am Gang von seinem Platz entfernen, was insbesondere bei Langstreckenflügen das Wohlbefinden und die Bequemlichkeit vermindert. Der "Gangsitzpassagier" muss dauernd eine Störung durch den "Fenstersitzpassagier" befürchten und kann somit nicht ungestört ruhen und auch der "Fenstersitzpassagier" fühlt sich entsprechend unwohl, da er sich als Störer fühlt, wenn er in den Gang treten möchte.
Aus den Figuren 3 und 4 dieses Dokuments sind Lösungen bekannt, die eine derartige Doppelsitzanordnung vermeiden möchten, ohne dass die Sitzabstände so groß gewählt werden müssen, um bei hintereinanderangeordneten Sitzen eine Liegeposition zu ermöglichen. Dafür ist in Fig. 3 eine bezüglich der Flugzeuglängsachse schräggestellte, mit Blick nach außen gerichtete Anordnung der Sitze sowie in Fig. 4 eine bezüglich der Flugzeuglängsachse schräggestellte, mit Blick nach innen gerichtete Anordnung der Sitze vorgesehen. Der Sitzabstand kann bei einer derartigen Überlappungskonfiguration dem bei einer Verwendung von bekannten Doppelsitzanordnungen üblichen Abstand für First-Class-Sitze entsprechen. Eine freie Zugänglichkeit zu jedem Passagiersitz ist gewährleistet. Aufgrund der Anordnung eines Primär- und eine Sekundärsitzes zu einer Sitzeinheit ist jedoch eine fixe Anordnung dieser Überlappungskonfiguration mit festen, der Liegefunktion angepassten Abmessungen gegeben. Der dafür notwendige Platzbedarf ist zwar für einen First-Class-Reisenden angemessen, kann jedoch in anderen, nicht so großzügig bemessenen Platz aufweisenden Klassen realisiert werden.

Aus EP-A-0 850 834 sind Passagiersitzanordnungen für ein Flugzeug bekannt, die in Schlafsitze umgewandelt werden können. Eine Doppelsitzanordnung kann von einer in Flugzeuglängsrichtung gerichteten "Tagesposition" in eine quer zur Flugzeuglängsrichtung gerichteten "Nachtposition" (Schlafposition) verstellt werden. Die Verstellung in die "Nachtposition" wird durch Drehung des Sitzes und unter Ausnutzung des Flugzeuglängsganges vorgenommen und ermöglicht eine vollständig horizontale Liegefläche, wobei die Gangfläche nahezu vollständig genutzt wird.

Der Erfindung liegt daher die Aufgabe zugrunde, für eine gattungsgemäße Passagierkabine mit einem begrenzten Platzangebot eine optimale Kabinenausnutzung zu erreichen und für den Passagier ausreichend Bewegungsraum und Privatsphäre zur Verfügung zu stellen, damit insbesondere bei Langstreckenflügen Komfort und Wohlbefinden erreicht wird.

Die Aufgabe wird bei einer gattungsgemäßen Passagierkabine durch die im Patentanspruch 1 genannten Maßnahmen gelöst.

Dabei ist insbesondere von Vorteil, dass bei geringeren Sitzabständen zwischen den Sitzreihen und geringerem Raumangebot als in der First Class innerhalb der Passagierkabine eine Sitzanordnung zur Verfügung gestellt werden kann, die auch bei längeren Flügen den Passagieren neben der Sitzfunktion ein Liegen ermöglicht und damit das Wohlbefinden des Passagiers gesteigert werden kann.

Weiterbildungen und vorteilhafte Ausgestaltungen sind in den Unteransprüchen 2 bis 7 angegeben sowie in der nachfolgenden Beschreibung erläutert.

In der Zeichnung ist ein Ausführungsbeispiel der Erfindung dargestellt, das nachstehend anhand der Figuren 1 bis 6 näher beschrieben ist. In den Figuren sind gleiche Bauteile mit gleichen Bezugszeichen versehen.

Es zeigen:
- Fig. 1: eine Draufsicht auf das Kabinenlayout eines Passagierflugzeuges mit einer erfindungsgemäßen Passagiersitzanordnung,
- Fig. 2: eine Perspektivdarstellung eines Ausschnitts einer Passagierkabine mit Passagiersitzen in der Start- und Landephase,
- Fig. 3: die Passagiersitzanordnung gemäß Fig. 2 während der Flugphase mit Passagiersitzen in Sitzposition,
- Fig. 4: die Passagiersitzanordnung gemäß Fig. 3 mit Passagiersitzen in Liegeposition,
- Fig. 5: die Passagiersitzanordnung innerhalb der Passagierkabine in einer weiteren Perspektivdarstellung während der Start- und Landephase und
- Fig. 6: die Passagiersitzanordnung gemäß Fig. 5 während der Flugphase.

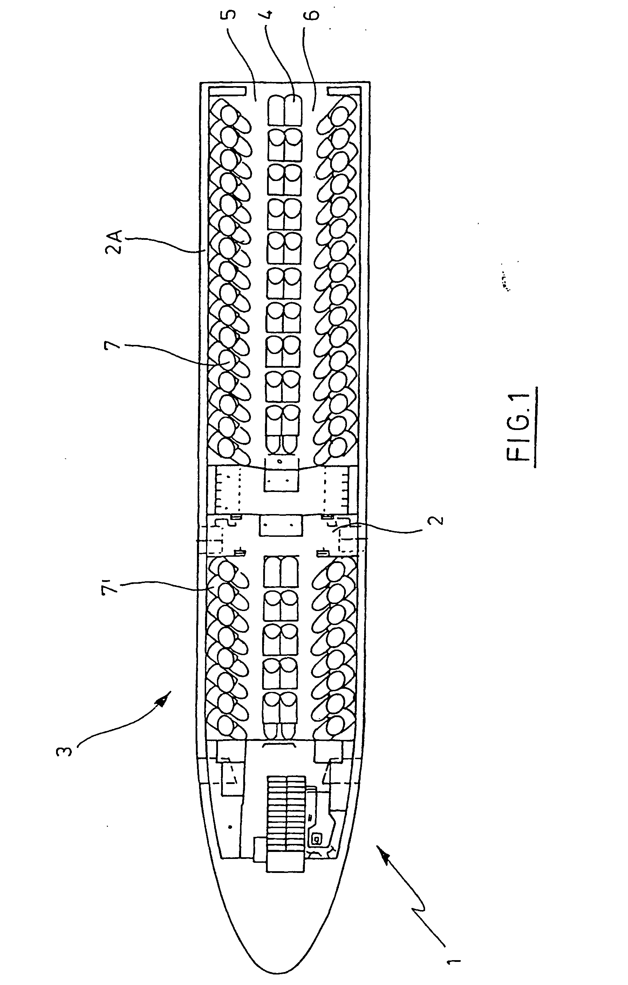

In der Fig. 1 ist in einer Draufsicht ein vorderer Teil eines Passagierflugzeugs 1 mit der Ansicht des Kabinenlayouts einer Passagierkabine 2 gezeigt. Ersichtlich ist eine Passagiersitzanordnung 3, die mit Doppelsitzen 4 im mittleren Bereich der Passagierkabine 2, zwischen zwei Gängen 5 und 6, sowie mit Einzelsitzen 7 an der Außenwandung 2A der Passagierkabine 2, vorzugsweise an Kabinenfenstern (nicht gezeigt) versehen ist. Die Mittelsitze 4 als Doppelsitzanordnung sind in Flugzeuglängsrichtung angeordnet und die Sitzabstände sind so gewählt, dass auch eine Liegeposition des Mittelsitzes erreicht werden kann. Dafür ist beispielsweise ein Sitzabstand von 142,5 cm notwendig, um ein vollständiges Absenken der Rückenlehne und damit eine brauchbare Liegefläche für einen Passagier mit einer Standardgröße von 195 cm zu erreichen. Eine gewisse Überschneidung der Liegeflächen von hintereinander angeordneten Sitzen wird dabei toleriert, um einen Kompromiss zwischen einer Minimierung der Sitzabstände und einer für den Passagier vernünftigen Liegefläche anbieten zu können. Die Doppelsitze 4 finden jedoch in der erfindungsgemäßen Anordnung nur als Mittelsitze Anwendung, da eine Doppelsitzanordnung an der Außenwandung 2A der Passagierkabine 2 erhebliche Nachteile der Zugänglichkeit mit sich bringt, wie ausführlich in der Beschreibungseinleitung erläutert wurde. An der Außenwandung 2A der Passagierkabine 2, üblicherweise im Bereich von Kabinenfenstern (nicht gezeigt) sind Einzelsitze 7 (im folgenden auch Außensitze genannt) angeordnet, die eine optimale Zugänglichkeit gewährleisten, ohne dass andere Passagiere gestört werden müssen. Eine Anordnung von Einzelsitzen statt einer möglichen Doppelsitzbank würde jedoch auch einen Verlust an Sitzplätzen bedeuten, was für einen Betreiber eines Passagierflugzeuges nicht akzeptabel ist. Somit sind die Außensitze 7 mit geringeren Sitzabständen zueinander aufgestellt, was einen Sitzplatzverlust gegenüber Doppelsitzen vermeidet oder zumindest vermindert. In der gezeigten Ausführungsform ist beispielsweise ein Sitzplatzabstand von 36" (91,6 cm) vorgesehen, der für ein bequemes Sitzen ausreichend ist, jedoch ein Ausklappen des Sitzes und Bereitsstellen einer Liegefläche nicht ermöglichen könnte. Als eine bevorzugte Ausbildung sind die Außensitze 7 nicht genau parallel zur Flugzeuglängsachse ausgerichtet, sondern mit einer leichten, in einem Bereich bis etwa 18° nach innen gerichteten Drehung des Sitzes innerhalb der Flugzeugpassagierkabine 2 angeordnet. Eine derartige Anordnung ist vorteilhaft, um eine gute Zugänglichkeit zum Sitz 7 zu erreichen und trotzdem für die Start- und Landephase eine Ausrichtung der Passagiersitze zu gewährleisten, die die bei Start und Landung auftretenden Trägheitskräfte bzw. Beschleunigungen für einen Passagier nicht unangenehm werden lassen. In der schattierten Darstellung ist die Lage der Außensitze 7 während der Start- und Landephase ersichtlich. Erfindungsgemäß ist vorgesehen, dass nach einem erfolgten Start für die Flugphase eine Drehung der Außensitze 7 zur Veränderung der Sitz- bzw. Liegerichtung der Passagiere erfolgen kann, um über ausreichend Platz zum Einstellen der Liegefunktion des betreffenden Außensitzes 7 zu verfügen. Die Gangbreite der Sitze 5 und 6 ist dafür auch ausreichend, da durch Wegfall der Doppelsitze an der Außenwandung 2A der Passagierkabine 2 die Gangbreite der Gänge 5 und 6 vergrößert werden kann. In Fig. 1 ist eine mögliche Anordnung mit Außensitzen in Liegeposition mit dem Bezugszeichen 7' gezeigt. Eine Drehung des Außensitzes 7 erfolgt in der bevorzugten Ausgestaltung bis etwa 54°gegenüber einer in Flugzeuglängsrichtung verlaufenden Achse. Die Drehung in einen Bereich zwischen 50° und 60° ist zum Erreichen einer optimalen Platzausnutzung anzustreben, eine Drehung des Außensitzes über diesen Bereich hinaus ist ebenfalls möglich, wenn der zur Verfügung stehende Gang zwischen den Außensitzen und den Mittelsitzen ausreichend breit ist.

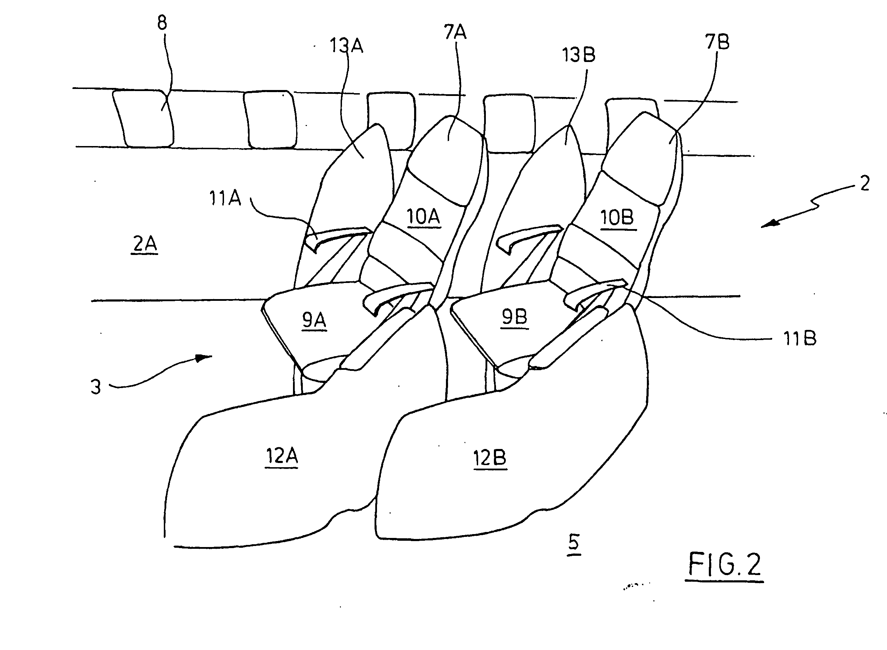

In der Fig. 2 ist in einer Perspektivdarstellung ein Ausschnitt einer Passagierkabine 2 gezeigt, der den Bereich der Außenwandung 2A mit Kabinenfenstern 8 umfasst. Es sind zwei Einzelsitze 7A und 7B dargestellt, die in nach vorn gerichteter Ausrichtung für die Start- und Landephase innerhalb der Passagierkabine 2 angeordnet sind und beispielhaft für die in Fig. 1 gezeigten Außensitze 7 einen Teil einer gesamten Passagiersitzanordnung 3 darstellen. Aufgrund einer leichten, zur Mitte der Passagierkabine 2 gerichteten Ausrichtung (vorzugsweise im Bereich bis etwa 18°) ist die Zugänglichkeit zum Passagiersitz 7A bzw. 7B sowie die Beinfreiheit für einen sitzenden Passagier verbessert. Die Passagiersitze 7A und 7B weisen jeweils ein Sitzteil 9A bzw. 9B, eine Rückenlehne 10A bzw. 10B sowie Armlehnen 11A und 11B auf. Eine Abgrenzung zum benachbarten Sitz kann mit einer Gangtrennwand 12A bzw.12B und/oder einer Wandtrennwand 13A bzw. 13B erreicht werden.

In Fig. 3 ist der Ausschnitt der Passagierkabine 2 gemäß Fig. 2 mit den Passagiersitzen 7A und 7B gezeigt, wobei an den Passagiersitzen eine Veränderung der Sitz- bzw. Liegerichtung der Passagiere mit einer weiteren Drehung des Sitzes erfolgt ist (gekennzeichnet durch Bezugszeichen 7A' und 7B'), die während einer langen Flugphase mehr Komfort und Zugänglichkeit bietet als herkömmliche Sitzanordnungen. In dieser Position steht ausreichend Platz zum Einstellen der Liegefunktion des betreffenden Außensitzes 7A' oder 7B' zur Verfügung. Insbesondere bei Langstreckenflügen kann es somit für den Passagier sehr angenehm sein, eine Verstellung an seinem Passagiersitz 7A oder 7B in die Position 7A' oder 7B' vornehmen zu können und durch Verstellung der Rückenlehne 10A bzw. 10B, Absenken der Armlehnen 11A bzw. 11B und eventuell einem herausziehbaren Fußteil 14A bzw. 14B eine ausreichende Liegefläche zu erhalten. Derartig verstellte Passagiersitze 7A' bzw. 7B' sind in der Figur 4 gezeigt. Um auch im Liegezustand eine unangenehme Nähe eines Passagiers zu seinem Nachbarn zu vermeiden, sind für die Liegeposition eines jeweiligen Sitzes 7A' oder 7B' die Wandtrennwände 13A und 13B vorgesehen, die jeweils seitlich an dem Sitz 7A' oder 7B' angeordnet sind. Die Wandtrennwand 13A bzw. 13B erstreckt sich ab der Hinterkante des Sitzteils 9A bzw. 9B bis zur Außenwandung 2A in Bereich der Unterkante des Kabinenfensters 8, so dass bei einem Zurückklappen der Rückenlehne 10A bzw. 10B ein "Privatbereich", abgeschirmt vom Sitznachbarn, entsteht. Die Wandtrennwand 13A bzw. 13B ist neben dem Passagiersitz 7A' oder 7B' so positioniert, dass die Drehbewegung des Sitzes beim Wechsel zwischen der Start- und Landephase sowie der Flugphase nicht gestört wird. Sie kann aus lichtdurchlässigem Material bestehen und der Lichteinfall aus Richtung der Kabinenfenster wird nicht gestört, wenn die Trennwand 13A bzw. 14A unterhalb der Kabinenfenster 8 endet. Die Gangtrennwand 12A bzw. 12B ist dem entsprechenden Passagiersitz 7A' oder 7B' auf Seiten des Ganges 5 zugeordnet. Die Gangtrennwand 12A bzw. 12B ist relativ niedrig ausgebildet, so dass eine Abschirmung im Sitzbereich eines Passagiers erreicht wird, aber für einen sitzenden Passagier Schulter- und Augenbereich nicht abgeschirmt wird, damit eine ausreichende Kommunikation mit der Umgebung und ein Blick in die Passagierkabine 2 möglich ist. In möglichen Ausgestaltungen kann die Gangtrennwand 12A bzw. 12B mit Servicefunktionen ausgestattet sein. So ist es beispielsweise möglich, einen Videomonitor, Telefon, Kommunikationselemente, individuelle Beleuchtungseinrichtungen, Aufbewahrungsbehältnisse oder einen Klapptisch in die Trennwand 12A bzw. 12B zu integrieren. Am eigentlichen Sitz 7A' bzw. 7B' kann dieses Zubehör dann weggelassen werden.

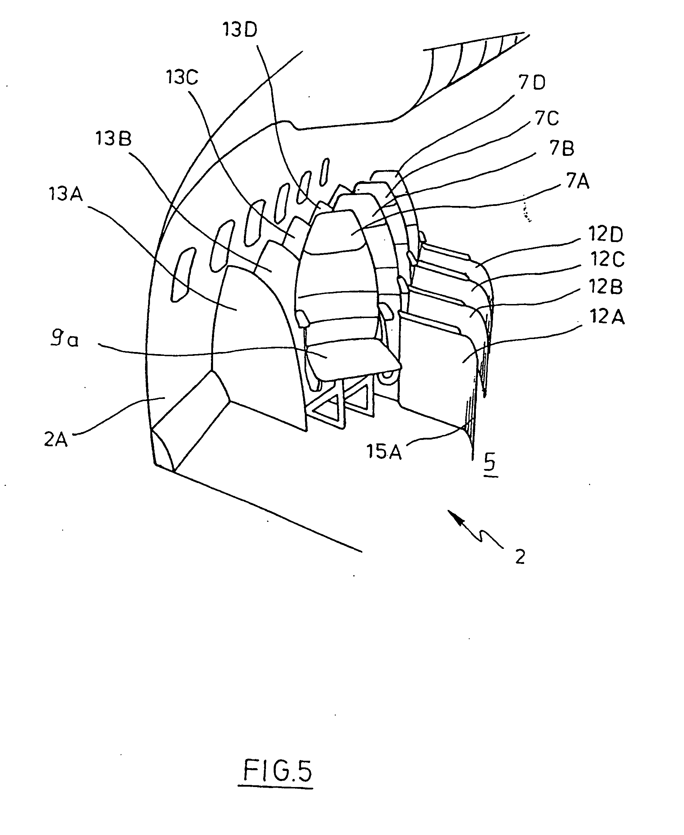

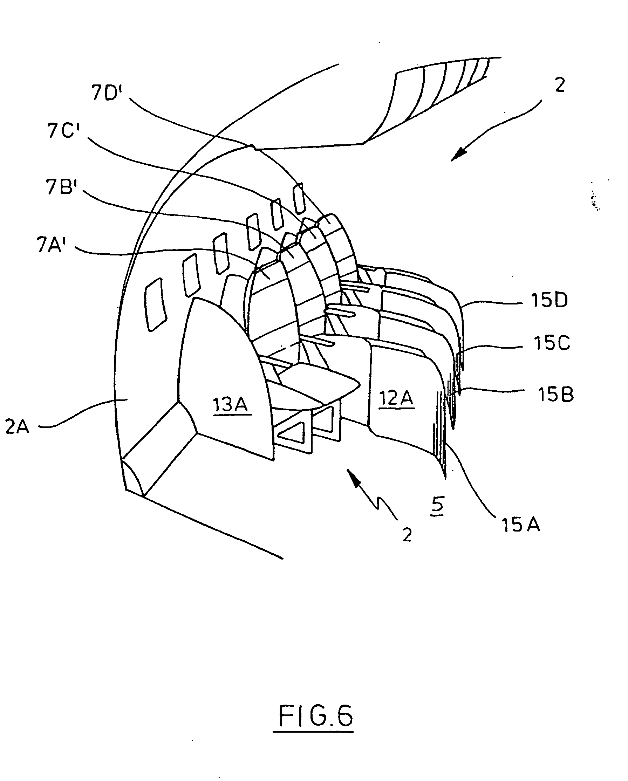

In einer weiteren Perspektivdarstellung der Passagierkabine 2 sind in den Figuren 5 und 6 Außensitze 7A, 7B, 7C sowie 7D gezeigt, die in der Passagierkabine 2 im Bereich der Außenwandung 2A in der Start- und Landephase sowie während der Flugphase (Sitze mit 7A', 7B', 7C' und 7D' bezeichnet) angeordnet sind. In dieser Anordnung sind die Wandtrennwände 13A, 13B, 13C sowie 13D an der Außenwandung 2A fixiert. Die Gangtrennwände 12A, 12B, 12C sowie 12D ermöglichen eine ausgewogene Raumaufteilung innerhalb der Passagierkabine 2, um einem Passagier eine Zuordnung zu seinem Platz und seines ihm zur Verfügung stehenden Platzes zu erleichtern. Möglich ist es weiterhin, an den Gangtrennwänden 12A bis 12D und/oder an den Wandtrennwänden 13A bis 13D flexible, beispielsweise fächerartige Trennelemente oder Blenden 15A bis 15D anzubringen, damit eine zusätzliche individuelle Anpassung der Abschirmung an die Wünsche eines Passagiers erfolgen kann.

### Bezugszeichenliste

- 1 -: Passagierflugzeug
- 2 -: Passagierkabine
- 3 -: Passagiersitzanordnung
- 4 -: Doppelsitze
- 5 -: Mittelgang
- 6 -: Mittelgang
- 7 -: Einzelsitz (7A - 7D)
- 7' -: Einzelsitz in veränderter Ausrichtung während der Flugphase (7A' - 7D')
- 8 -: Kabinenfenster
- 9 -: Sitzteil (9A, 9B)
- 10 -: Rückenlehne (10A, 10B)
- 11 -: Armlehne (11 A, 11 B)
- 12 -: Gangtrennwand (12A - 12D)
- 13 -: Wandtrennwand (13A - 13B)
- 14 -: Fußteil (14A - 14B)
- 15 -: Blenden (15A - 15B)

## Patentansprüche

1. Flugzeugpassagierkabine mit einer Anordnung von Passagiersitzen, wobei die Passagiersitze in eine Sitzposition mit aufrechter Rückenlehne und in zumindest eine Liegeposition mit abgesenkter Rückenlehne einstellbar sind sowie an der Außenwandung der Passagierkabine hintereinander angeordnete Passagiersitze in der Liegeposition in einer überlappenden Anordnung vorgesehen sind und während der Start- und Landephase eine im wesentlichen in Flugzeuglängsrichtung nach vorn ausgerichtete Lage der Sitze (7; 7A, 7B, 7C, 7D) sowie während der Flugphase zumindest ein Sitz (7'; 7A', 7B', 7C', 7D') eine in Richtung der Passagierkabinenmittelachse nach innen gedrehte Lage einnimmt, und dieser Sitz (7; 7A, 7B, 7C, 7D) ein Sitzteil (9A, 9B) sowie eine Rückenlehne (10A, 10B) aufweist, **dadurch gekennzeichnet, dass** die Passagiersitze an der Außenwandung (2A) der Passagierkabine (2) als Einzelsitze (7; 7A, 7B, 7C, 7D) ausgebildet und benachbart zu einem Gang (5) angeordnet sind, die Passagiersitze (7; 7A, 7B, 7C, 7D) mit einem Sitzabstand zwischen den Sitzen (7; 7A, 7B, 7C, 7D) entsprechend dem Platzbedarf für die Sitzposition angeordnet sind und in der nach innen gedrehten Drehposition des Sitzes (7'; 7A', 7B', 7C', 7D') eine Teilfläche des Ganges (5) zur Erreichung der Liegeposition des Sitzes vorgesehen ist sowie mindestens eine Abschirmung (12, 13) seitlich des Sitzes (7, 7A, 7B, 7C, 7D) zur Erreichung eines Privatbereichs für den Passagier angeordnet ist, wobei jedem Einzelsitz (7A, 7B, 7C, 7D; 7A', 7B', 7C', 7D') eine Wandtrennwand (13A, 13B, 13C, 13D) zugeordnet ist zur Abschirmung in der Liegeposition zum nebengeordneten Sitz in Richtung der Außenwandung (2A) der Passagierkabine (2) und die Wandtrennwand (13A, 13B, 13C, 13D) sich ab der Hinterkante des Sitzteils (9A, 9B) bis zur Außenwandung (2A) im Bereich der Unterkante eines Kabinenfensters (8) erstreckt oder die Wandtrennwand aus lichtdurchlässigem Material besteht.

2. Passagierkabine nach Anspruch 1,
**dadurch gekennzeichnet, dass**
die Einzelsitze (7; 7A, 7B, 7C, 7D) für die Flugphase in eine Position von etwa 50 - 60° bezüglich der Flugzeuglängsachse in Richtung Kabinenmitte drehbar sind.

3. Passagierkabine nach einem der Ansprüche 1 oder 2,
**dadurch gekennzeichnet, dass**
die Einzelsitze (7; 7A, 7B, 7C, 7D) für die Start- und Landephase in eine Position bis etwa 18° bezüglich der Flugrichtung nach innen ausgerichtet sind.

4. Passagierkabine nach einem der Ansprüche 1 bis 3,
**dadurch gekennzeichnet, dass**
jedem Einzelsitz (7A, 7B, 7C, 7D; 7A', 7B', 7C', 7D') eine Gangtrennwand (12A, 12B, 12C, 12D) zugeordnet ist zur Abschirmung zum nebengeordneten Sitz in Richtung des Ganges (5, 6) der Passagierkabine (2).

5. Passagierkabine nach Anspruch 4,
**dadurch gekennzeichnet, dass**
die Gangtrennwand (12A, 12B, 12C, 12D) ausgehend vom Sitzteil (9A, 9B) in Richtung des Ganges (5, 6) bis etwa zu einem Endpunkt verläuft, der bei einer Liegeposition des Einzelsitzes (7A, 7B, 7C, 7D) durch ein ausgefahrenes Fußteil (14A, 14B) gebildet ist.

6. Passagierkabine nach einem der Ansprüche 1 bis 5,
**dadurch gekennzeichnet, dass**
die Gangtrennwand (12A, 12B, 12C, 12D) und/oder die Wandtrennwand (13A, 13B, 13C, 13D) flexible Trennelemente (15A, 15B, 15C, 15D) aufweisen.

7. Passagierkabine nach einem der vorangegangenen Ansprüche,
**dadurch gekennzeichnet, dass**
die Gangtrennwand (12A, 12B, 12C, 12D) und/oder die Wandtrennwand (13A, 13B, 13C, 13D) dem Sitzplatz zugeordnete Service- und Ausrüstungsgegenstände aufweisen, wie Videomonitore, Beleuchtungsmittel, Klapptische, Aufbewahrungsbehältnisse, Kommunikationsmittel.

## Claims

1. Passenger cabin of an aircraft, said cabin having an arrangement of passenger seats, wherein said passenger seats can be set in a sitting position with the backrest upright and in at least one reclining position with the backrest lowered, and also passenger seats arranged one behind another at the outer wall of the passenger cabin are provided in the reclining position in an overlapping arrangement and, during the take-off and landing phase, an orientation of the seats (7; 7A, 7B, 7C, 7D) which is directed forwards, substantially in the longitudinal direction of the aircraft ... and also, during the flight phase, at least one seat (7'; 7A', 7B', 7C', 7D') assumes an orientation which is turned inwards in the direction of the central axis of the passenger cabin, and the said seat (7; 7A, 7B, 7C, 7D) has a seating part (9A, 9B) and also a backrest (10A, 10B),
**characterised in that** the passenger seats at the outer wall (2A) of the passenger cabin (2) are constructed as individual seats (7; 7A, 7B, 7C, 7D) and are arranged adjacent to an aisle (5), said passenger seats (7; 7A, 7B, 7C, 7D) are arranged with a gap between the seats (7: 7A, 7B, 7C, 7D) corresponding to the space requirement for the sitting position and, in the inwardly turned rotational position of the seat (7'; 7A', 7B', 7C', 7D'), a partial area of the aisle (5) is provided for achieving the reclining position of the seat, and also at least one screen (12, 13) is arranged alongside the seat (7, 7A, 7B, 7C, 7D) for achieving a private area for the passenger, there being associated with each individual seat (7A, 7B, 7C, 7D; 7A', 7B', 7C', 7D') a wall partition (13A, 13B, 13C, 13D) for effecting screening-off, in the reclining position, from the seat arranged alongside in the direction of the outer wall (2A) of the passenger cabin (2), and the wall partition (13A, 13B, 13C, 13D) extends from the rear edge of the seating part (9A, 9B) as far as the outer wall (2A) in the region of the lower edge of a cabin window (8), or the wall partition consists of light-permeable material.

2. Passenger cabin according to claim 1,
**characterised in that** the individual seats (7; 7A, 7B, 7C, 7D) can be turned, for the flight phase, in the direction of the centre of the cabin into a position of about 50 - 60° with respect to the longitudinal axis of the aircraft.

3. Passenger cabin according to one of claims 1 or 2,
**characterised in that** the individual seats (7; 7A, 7B, 7C, 7D) are directed inwards, for the take-off and landing phase, into a position of up to about 18° with respect to the direction of flight.

4. Passenger cabin according to one of claims 1 to 3,
**characterised in that** an aisle partition (12A, 12B, 12C, 12D) is associated with each individual seat (7A, 7B, 7C, 7D; 7A', 7B', 7C', 7D') for effecting screening-off from the seat arranged alongside in the direction of the aisle (5, 6) of the passenger cabin (2).

5. Passenger cabin according to claim 4,
**characterised in that** the aisle partition (12A, 12B, 12C, 12D) extends, starting from the seating part (9A, 9B), in the direction of the aisle (5, 6) about as far as an end point which is formed, when the individual seat (7A, 7B, 7C, 7D) is in a reclining position, by an extended foot part (14A, 14B).

6. Passenger cabin according to one of claims 1 to 5,
**characterised in that** the aisle partition (12A, 12B, 12C, 12D) and/or the wall partition (13A, 13B, 13C, 13D) have flexible separating elements (15A, 15B, 15C, 15D).

7. Passenger cabin according to one of the previous claims,
**characterised in that** the aisle partition (12A, 12B, 12C, 12D) and/or the wall partition (13A, 13B, 13C, 13D) have service and equipment items, such as video monitors, lighting means, folding tables, storage containers and communications means, which are associated with the seat space.

## Revendications

1. Cabine de passagers d'un aéronef comprenant un ensemble de sièges de passagers qui peuvent être réglés dans une position assise avec dossiers dressés et dans une position allongée avec dossiers rabattus, et pour ces sièges disposés l'un derrière l'autre le long de la paroi externe de la cabine des passagers il est prévu qu'en position allongée ils se chevauchent et que, pendant la phase de décollage et d'atterrissage, les sièges (7 ; 7A, 7B, 7C, 7D) ont essentiellement une position dressée et dirigée selon une direction longitudinale de l'appareil, tandis que pendant la phase de vol au moins un siège (7' ; 7A', 7B', 7C', 7D') prend une position tournée vers l'intérieur en direction de l'axe médian de la cabine, ce siège présentant une partie d'assise (9A, 9B) ainsi qu'un dossier (10A, 10B), **caractérisée en ce que**
- les sièges de passagers, le long de la paroi externe (2A) de la cabine de passagers (2) sont des sièges individuels (7 ; 7A, 7B, 7C, 7D) proches d'un couloir (5),
- les sièges de passagers (7 ; 7A, 7B, 7C, 7D) sont montés avec entre eux une distance correspondante au besoin de place pour la position assise,
- quand le siège (7' ; 7A', 7B', 7C', 7D') est tourné vers l'intérieur, une partie de la surface du couloir (5) est prévue pour accueillir le siège en position allongée,
- au moins un écran (12, 13) est disposé sur le côté du siège (7, 7A, 7B, 7C, 7D) pour créer un espace privé pour le passager
- à chaque siège individuel (7, 7A, 7B, 7C, 7D ; 7A', 7B', 7C', 7D') est associée une paroi séparatrice (13A, 13B, 13C, 13D) destinée à faire écran en position allongée par rapport au siège disposé à côté, et dirigée vers la paroi externe (2A) de la cabine de passagers (2), chaque paroi séparatrice s'étendant du bord arrière de la partie d'assise (9A, 9B) jusqu'à la paroi externe (2A), dans la zone du bord inférieur d'une fenêtre de cabine (8) et étant faite d'un matériau transparent.

2. Cabine de passagers selon la revendication 1, **caractérisée en ce que** les sièges individuels (7 ; 7A, 7B, 7C, 7D), en phase de vol, peuvent être tournés pour venir occuper une position inclinée de 50 à 60° environ, par rapport à l'axe longitudinal de l'aéronef, en direction du milieu de la cabine.

3. Cabine de passagers selon la revendication 1 ou 2, **caractérisée en ce que** les sièges individuels (7 ; 7A, 7B, 7C, 7D), en phase de décollage ou d'atterrissage, sont orientés vers l'intérieur en faisant un angle allant jusqu'à environ 18° avec la direction longitudinale de l'aéronef.

4. Cabine de passagers selon une des revendications 1 à 3, **caractérisée en ce qu'**à chaque siège individuel (7A, 7B, 7C, 7D ; 7A', 7B', 7C', 7D'), est associée une paroi séparatrice de couloir (12A, 12B, 12C, 12D) destinée à faire écran par rapport au siège situé à côté, et dirigée vers le couloir (5, 6) de la cabine de passagers (2).

5. Cabine de passagers selon la revendication 4, **caractérisée en ce que** la paroi séparatrice de couloir (12A, 12B, 12C, 12D) part de la partie d'assise (9A, 9B) en direction du couloir (5, 6) jusqu'à un point d'extrémité qui est constitué, quand le siège individuel (7A, 7B, 7C, 7D) est en position allongée, par une partie de pied (14A, 14B) amenée en avant.

6. Cabine de passagers selon une des revendications 1 à 5, **caractérisée en ce que** la paroi séparatrice de couloir (12A, 12B, 12C, 12D) et/ou la paroi séparatrice de paroi (13A, 13B, 13C, 13D) présentent des éléments séparateurs flexibles (15A, 15B, 15C, 15D).

7. Cabine de passagers selon une des revendications précédentes, **caractérisée en ce que** la paroi séparatrice de couloir (12A, 12B, 12C, 12D) et/ou la paroi séparatrice de paroi (13A, 13B, 13C, 13D) présentent des objets d'équipement ou de service associés à la place assise, tels que des moniteurs vidéo, des moyens d'éclairage, des tablettes basculantes, des récipients de stockage, des moyens de communication.
